# EUROPÄISCHE PATENTANMELDUNG

(11) **EP 0 890 553 A2**
(43) Veröffentlichungstag der Anmeldung: **13.01.1999**
(21) Anmeldenummer: 98110390.6
(22) Anmeldetag: 06.06.1998
(51) Int. Cl.: C02F 3/12

(54) **Verfahren zur biologischen Abwasserreinigung und Anlage zur Durchführung des Verfahrens**

(30) Priorität: 11.07.1997 DE 19729701; 10.01.1998 DE 19800664
(71) Anmelder: SHW Hölter Wassertechnik GmbH, 45136 Essen (DE)
(72) Erfinder: Wotrubez, Herbert, 65552 Limburg (DE); Schröder, Reinhard, 45239 Essen (DE)
(74) Vertreter: Schulte, Jörg, Dipl.-Ing.

(57) **Zusammenfassung**

Zur biologischen Abwasserreinigung wird das schlammbeladene Abwasser in einem Belebungsbecken 2, 13 behandelt, wobei Belebtschlammbehandlung und Schlammrückhaltung derart kombiniert werden, dass die Schlammrückhaltung im Anschluss an die Belebtschlammbehandlung im Belebungsbecken 2, 13 vorgenommen werden kann. Hierzu sind im Belebungsbeckens 2, 13 ein oder mehrere Schlammabscheider 10, vorzugsweise mit schräggestellten Lamellenplatten 16, 17, 18 installiert, wobei sich der Belebtschlamm auf den schräggestellten Lamellenplatten 16, 17, 18 absetzt und dann nach unten abrutscht, um dann für die biologische Abwasserbehandlung im Belebungsbecken 2, 13 wieder zur Verfügung zu stehen.

## Beschreibung

Die Erfindung betrifft ein Verfahren zur biologischen Abwasserreinigung mit Abwasservorbehandlung, Belebtschlammbehandlung im Belebungsbecken unter Sauerstoffzufuhr durch Luft oder Reinsauerstoff und anschließender Schlammrückhaltung durch Trennung von Schlamm und Reinwasser. Die Erfindung betrifft außerdem eine Anlage zur Durchführung des Verfahrens mit einem im Zulauf angeordneten Rechen, einem Sandfang und einem Belebungsbecken mit Ablaufleitung.

Als Abwässer werden die aus Haushalten und der gewerblichen Industrie abfließenden, verunreingten Wässer bezeichnet. Insbesondere die städtischen Abwässer weisen neben groben Beimengungen wie Sand auch faulende Stoffe und Bakterien auf. Die Abwasserreinigung soll so betrieben werden, dass die Selbstreinigungskraft der Vorfluter ausreicht, den restlichen Schmutz abzubauen. Bekannt sind verschiedene Abwasserreinigungsverfahren, wobei mit Hilfe der biologischen Verfahren die Schmutzstoffe wegen der großen anfallenden Mengen künstlich durch Mikroorganismen abgebaut werden. In sogenannten Belebungsbecken werden die mit Schmutzstoffen beladenen Abwässer mit Belebtschlamm und den darin enthaltenen Mikroorganismen soweit biologisch gereinigt, dass in einer anschließenden Nachklärung der Schlamm vom Reinwasser getrennt werden kann. Dabei muss Belebtschlamm immer im Kreislauf geführt werden, um eine ausreichende Menge an Mikroorganismen in der biologischen Behandlungsstufe zu sichern. Die Nachklärung ist somit bei derartigen Belebungssystemen integraler Bestandteil der biologischen Stufe (DE-PS 43 29 239). Bekannt ist es nach der DE-PS 43 29 239 auch, im Nachklärbecken Lamellenpakete einzusetzen, um die Nachteile der bisher bekannten Sedimentationsbecken zu beheben. Es werden in der Beschreibung zum Stand der Technik auch spezielle Lamellenseperatoren erwähnt, die statt oder ergänzend zu den Sedimentationsbecken eingesetzt worden sind. Zur Erhöhung der Biomassenkonzentration im Belebungsbecken werden ebenfalls solche schräg ansteigend verlaufende Lamellenpakete vorgeschlagen. In den Lamellenpaketen kann zur Steuerung der Aufenthaltszeit des Schlammes in den Lamellen eine Belüftung unmittelbar vor oder in den Lamellen vorhanden sein. Eine Nachklärung im Nachklärbecken bleibt allerdings erforderlich. Nachteilig ist dabei, dass bei derartigen Verfahren und auch den dazu vorgesehenen Anlagen nicht nur der Belebtschlamm im Kreislauf geführt werden muss, sondern dass die Nachklärung eine eigene Stufe mit entsprechend hohem Investitionsaufwand darstellt. Es fallen aber nicht nur höhere Herstellungskosten, sondern vor allem auch wesentlich höhere Betriebskosten an. Besonders problematisch ist dies, wenn eine vorhandene Anlage aufgrund höherer Abwassermengen erweitert werden muss.

Der Erfindung liegt daher die Aufgabe zugrunde, ein Abwasserbehandlungsverfahren und eine Anlage zu schaffen, mit denen die Nachklärung entlastet oder sogar eingespart werden kann.

Die Aufgabe wird gemäß der Erfindung dadurch verfahrensmäßig gelöst, dass Belebtschlammbehandlung und Schlammrückhaltung derart kombiniert werden, dass die Schlammrückhaltung im Anschluss an die Belebtschlammbehandlung bereits im Belebungsbecken so vorgenommen wird, dass das Belebungsbecken mit > 8 g/l Trockensubstanzgehalt betrieben wird.

Bei Verwirklichung eines derartigen Verfahrens kann somit sowohl beim Neubau von entsprechenden Anlagen, wie auch bei der Erweiterung entsprechender Anlagen ein Teil der Investitionskosten eingespart werden. Beim Neubau kann grundsätzlich auf die Nachklärung ganz verzichtet werden, während bei vorhandenen und zu vergrößernden Anlagen die Nachklärung durch Anwendung des erfindungsgemäßen Verfahrens soweit entlastet wird, dass die Nachklärung ohne entsprechende, kostenaufwendige Erweiterung weiter betrieben werden kann, während die Belebtschlammbehandlung entsprechend den neuen Gegebenheiten ausgelegt wird. Aufgrund des Zurückhaltens des Belebtschlammes bereits im Belebungsbecken entfällt jede Rückführung von Schlamm unter entsprechender Einsparung von Betriebskosten. Vorteilhaft ist dabei, dass der in der Schlammrückhaltung festgehaltene Schlamm vom vorbeiströmenden, zu reinigenden Wasser mitgenommen und dann eben für die weitere Abwasserbehandlung vorteilhaft vergleichmäßigt zur Verfügung steht. Dies bedeutet, dass auch der Reinigungsprozeß durch die Rückhaltung des Schlammes im Belebungsbecken verbessert wird.

Nach einer zweckmäßigen Ausführung der Erfindung ist vorgesehen, dass die Schlammrückhaltung zu > 50 bis < 100 % im Belebungsbecken vorgenommen und sich daran eine Filterbehandlung des Abwassers anschließt. Eine solche Ausführung des Verfahrens kann dann Vorteile haben, wenn das vorhandene Belebungsbecken entsprechend andere Belastungen nicht zulässt oder wenn insbesondere eine entsprechende Schlammrückhaltung in der notwendigen Größe nicht vorhanden ist bzw. nicht eingerichtet werden kann. Über die Filtration werden dann vorhandene Schlammbestandteile aus dem Wasser problemlos abgeschieden, ohne dass es einer Nachklärung bedarf.

Ein ruhiger und gleichmäßiger Betrieb und eine entsprechende Verwirklichung des erfindungsgemäßen Verfahrens ist dann gegeben, wenn die schlammbeladene Flüssigkeit etwa in der Größenordnung des zuströmenden Abwassers dem Schlammabscheider gezielt zugeführt wird. Es wird nur so viel an Reinwasser dem Belebungsbecken entnommen, wie Abwasser zugeführt wird, sodass insgesamt die ruhige, gleichmäßige Strömung im Belebungsbecken eingehalten werden kann, damit vor dem Wasserablauf aus dem Belebungsbecken die mit Belebtschlamm beladene Flüssigkeit einem oder mehreren im Belebungsbecken angeordneten Schlammabscheidern zugeführt und dort vom Schlamm befreit wird.

Besonders zweckmäßig läßt sich das erfindungsgemäße Verfahren durchführen, wenn die Strömung der schlammbeladenen Flüssigkeit in zur Senkrechten schräggestellten Lamellenplatten eines Schlammabscheiders vergleichmäßigt und dabei in Reinwasser und Schlamm getrennt wird, wobei das Reinwasser im Gegenstrom zum auf den Lamellenplatten abgeschiedenen und nach unten rutschenden Schlamm in den Lamellen nach oben geführt wird, während der Schlamm vom Umlaufwasser abtransportiert und im Belebungsbecken in Schwebe gehalten wird. Bei entsprechend bemessenen Lamellen, die von den schräggestellten Lamellenplatten gebildet werden, ist eine Ausscheidung des Belebtschlammes soweit möglich, dass über die Ablaufleitung ausschließlich Reinwasser abgeführt wird, das problemlos dem Vorfluter zugeführt werden kann. Der abrutschende Belebtschlamm kommt wieder ins System und wird soweit notwendig vom Umlaufwasser mitgenommen und für die Reinigung bzw. Beeinflussung des zulaufenden Abwassers eingesetzt.

Eine weitere zweckmäßige Ausführung der Erfindung sieht vor, dass die schlammbeladenen Flüssigkeit mit Sauerstoff versorgt und dann auf die von den Lamellenplatten gebildeten Lamellen gerichtet wird. Der Flüssigkeitsstrom dringt dann soweit möglich und notwendig in den Bereich der Lamellen ein, während der übrige Flüssigkeitsstrom unterhalb derselben weitergeführt wird.

Während beim Stand der Technik ein Großteil des benötigten Belebtschlammes aus der Nachklärung in das Belebungsbecken zurückgeführt werden muss, ist beim erfindungsgemäßen Verfahren immer die notwendige Menge an Belebtschlamm vorhanden. Letztlich gibt es sogar einen Überschuss an Belebtschlamm, der sich auf dem Boden des Belebungsbeckens absetzt. Um hier die notwendige Strömung auch unterhalb des Schlammabscheiders wahren zu können, sieht die Erfindung vor, dass der in den Bereich des Belebungsbeckens unterhalb der Lamellen bzw. Lamellenplatten abgerutschte biologische Überschussschlamm in regelmäßigen Abständen aus dem System entfernt wird. Dabei sind die unterschiedlichsten Methoden anwendbar, beispielsweise auch das Sammeln des Überschussschlammes auf dem Beckenboden bzw. darin vorgesehenen Bunkern, aus dem der biologische Überschussschlamm abgezogen und entsorgt werden kann.

Zur Durchführung des Verfahrens ist vorgesehen, dass vor der Ablaufleitung ein den Strömungsquerschnitt des Belebungsbeckens ganz oder teilweise ausfüllend ausgebildeter Schlammabscheider, vorzugsweise mit schräggestellten Lamellenplatten angeordnet ist. Der schlammbeladene Flüssigkeitsstrom wird somit zwangsweise durch den Schlammabscheider geführt, bevor er zur Ablaufleitung bzw. der Ablaufrinne gelangt. Schlamm und Reinwasser werden von einander getrennt, sodass über die Ablaufrinne praktisch Reinwasser und zumindest so weit vorgereinigtes Abwasser abgeführt wird, dass es in den Vorfluter abgeleitet werden kann. Zwar werden mit Lamellen ausgerüstete Schlammabscheider für die Teilabscheidung von Schlämmen auch bei der biologischen Abwasserreinigung bereits eingesetzt, nicht jedoch für die vollständige Abscheidung von Belebtschlämmen zur Vermeidung einer nachfolgenden Nachklärung. Vielmehr wird bisher eine Zusetzen der Lamellen durch den sich aufbauenden Schlamm befürchtet, weshalb unter anderem auch Luft hinzugeführt wird, um so die Geschwindigkeit innerhalb der Lamellen beeinflussen zu können. Es hat sich auch gezeigt, dass durch die besondere Ausbildung des Verfahrens und die Rückführung des biologischen Schlammes in das Belebungsbecken der gesamte Prozess optimaler ausgeführt werden kann. Ein weitgehend von Schlamm entlasteter Reinwasserstrom kann ungehindert in den Vorfluter abgegeben werden. Insbesondere hat sich überraschend herausgestellt, dass die Zwischenräume zwischen den einzelnen, schräggestellten Lamellenplatten nicht durch den Belebtschlamm zuwachsen, sondern vielmehr bei entsprechender Ausbildung einen vorteilhaften Verfahrensablauf auch über lange Zeiträume sicherstellen.

Die langen Standzeiten werden insbesondere dadurch gewährleistet, dass die Lamellenplatten als Kunststoffplatten oder anderen glattflächigen Materialien ausgebildet sind, die einen Lamellenplattenabstand von 50 - 500 mm, vorzugsweise 100 mm aufweisen. Die hauptsächlich zum Einsatz kommenden Kunststoffplatten haben den Vorteil, dass sie auch agressiveren Medien widerstehen und eine gleichbleibende Glätte aufweisen, sodass das Abrutschen des Belebtschlamms auf den schräggestellten Platten sichergestellt ist. Durch den Zwischenraum von 100 mm und mehr wird das Zuwachsen der Zwischenräume verhindert, ohne dass der Abscheidegrad dadurch negativ beeinflusst würde. Bei bekannten Lamellenabscheidern liegt der Lamellenzwischenraum bei deutlich unter 100 mm.

Zur leichteren Montage und ggf. notwendigen Demontage ist gemäß der Erfindung vorgesehen, dass die Lamellenplatten zu Lamellenpaketen zusammengefasst in der schlammbeladenen Flüssigkeit angeordnet und über eine Befestigungskonstruktion fixiert sind, die sich auf dem Beckenboden und/oder an den Seitenwänden des Belebungsbeckens abstützt. Eine solche Ausbildung hat den Vorteil, dass die zu Lamellenpaketen zusammengefasste Kompakteinheit mit der Befestigungskonstruktion in das Belebungsbecken eingesetzt werden kann, also nach entsprechender Vorbereitung werkseitig und ohne die Notwendigkeit einer Nachrüstung in der Kläranlage. Eine derartige kompakte Station kann dann auch bei Bedarf aus dem Belebungsbecken wieder entfernt und gewartet werden, ohne dass es erforderlich ist, in der Zwischenzeit das Belebungsbecken als solches stillzulegen und zu entleeren.

Bei bekannten Anlagen werden Belüfter eingesetzt, um das Wachstum der Mikroorganismen zu begünstigen. Es hat sich als besonders vorteilhaft erwiesen, in Strömungsrichtung vor dem Schlammabscheider einen in das Belebungsbecken integrierten Oberflächenbelüfter anzuordnen oder bei Einsatz einer Druckbelüftung eine geeignete Strömung erzeugende Tauchrührwerke vorzusehen. Diese Belüftungseinrichtungen sorgen für die gleichmäßige Zuführung der benötigten Luft und zwar möglichst über den gesamten Strömungsquerschnitt gesehen, sodass anschließend ein entsprechend "arbeitender" Schlamm in den Bereich des Schlammabscheiders kommt, was unter anderem auch den Vorteil hat, dass der auf den Lamellen abrutschende Belebtschlamm, der dann von der darunter hindurchgehenden Wasserströmung aufgenommen wird, für die Weiterbehandlung des Abwassers in optimalem Zustand zur Verfügung steht.

Weiter vorn ist bereits darauf hingewiesen worden, dass ein Durchfluss von Wasser unterhalb des Schlammabscheiders zweckmäßig ist. Ergänzend sieht hierzu die Erfindung vor, dass der Schlammabscheider mit den Lamellenplatten über die Befestigungskonstruktion einen ausreichenden Abstand von vorzugsweise 1/5 bis 1/3 der Beckengesamthöhe zum Beckenboden wahrend angeordnet ist. Damit wird ergänzend sichergestellt, dass der von den Lamellenplatten abgerutschte Schlamm möglichst weitgehend vom unten durchströmenden Wasserstrom erfasst und mitgenommen wird.

Zur Belebtschlammentsorgung sieht die Erfindung vor, dass am oder im Belebungsbecken an einer oder an mehreren Stellen Schlammabzüge für den Überschussschlamm zugeordnet sind. Ist eine bestimmte Menge an Schlamm auf dem Beckenboden vorhanden, so wird der Überschussschlamm gesammelt abgeführt. Hierzu kann es zweckmäßig sein, im Beckenboden Öffnungen oder auch eine Art Bunker vorzusehen, in den der Schlamm rutscht. Auch aus diesem Schlammbunker kann der Schlamm dann in regelmäßigen Abständen abgezogen werden. Wichtig dabei ist, dass es im Bereich unterhalb der Lamellenplatten nicht zu nachteiligen Strömungen kommt, die sich unter Umständen bis in die Zwischenräume zwischen den einzelnen Lamellen auswirken. Vielmehr soll der Flüssigkeitsstrom auch in diesem Bereich möglichst gleichmäßig sein.

Die Erfindung zeichnet sich insbesondere dadurch aus, dass ein Verfahren und eine Anlage geschaffen sind, die sowohl von den Investitions- wie auch den Betriebskosten vorteilhafte Entlastungen mit sich bringen. Dies gilt sowohl für den Neubau entsprechender Kläranlagen, wie auch für die Erweiterung vorhandener Kläranlagen, da auf die bisher notwendige Nachklärung weitgehend oder sogar ganz verzichtet werden kann. Damit entfällt auch die Notwendigkeit, Nachklärbecken sowie für den Schlamm Ringleitungen mit entsprechenden Pumpen zu installieren. Überraschenderweise ist der Abscheidegrad so gut, dass bei entsprechender Anordnung und Ausbildung des Schlammabscheiders das Reinwasser direkt dem Vorfluter zugeführt werden kann. Bezüglich des zum Einsatz kommenden Schlammabscheiders kann auf bekannte Lamellenabscheider zurückgegriffen werden, die allerdings für den Einsatzfall im Belebungsbecken ausgerüstet und konstruiert sein müssen. Gerade bei der Erweiterung von Städten und damit der Notwendigkeit, größere Abwassermengen zu entsorgen, erweist sich das erfindungsgemäße Verfahren und die erfindungsgemäße Anlage als immenser Vorteil, weil die Abwassermengen ohne Erweiterung des Belebungsbeckens und vor allem ohne Erweiterung oder den Neubau von Nachklärbeckens verarbeitet werden können. Selbst dann, wenn das Belebungsbecken vergrößert wird, kann auf ein Nachklärbecken verzichtet oder das bereits vorhandene Nachklärbecken sogar noch entlastet weiterbenutzt werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine schematisch wiedergegebene Anlage mit vorgeschalteter, biologischer Phosphorelimination,
- Fig. 2: eine entsprechende Anlage ohne die Phosphorelimination,
- Fig. 3: eine Draufsicht auf eine Anlage mit zwei Belebungsbecken,
- Fig. 4: eine vergrößerte Wiedergabe des Bereiches der Schlammabscheidung,
- Fig. 5: einen Querschnitt durch den Schlammabscheider und
- Fig. 6: den unteren Bereich des Schlammabscheiders mit Schlammbunker.

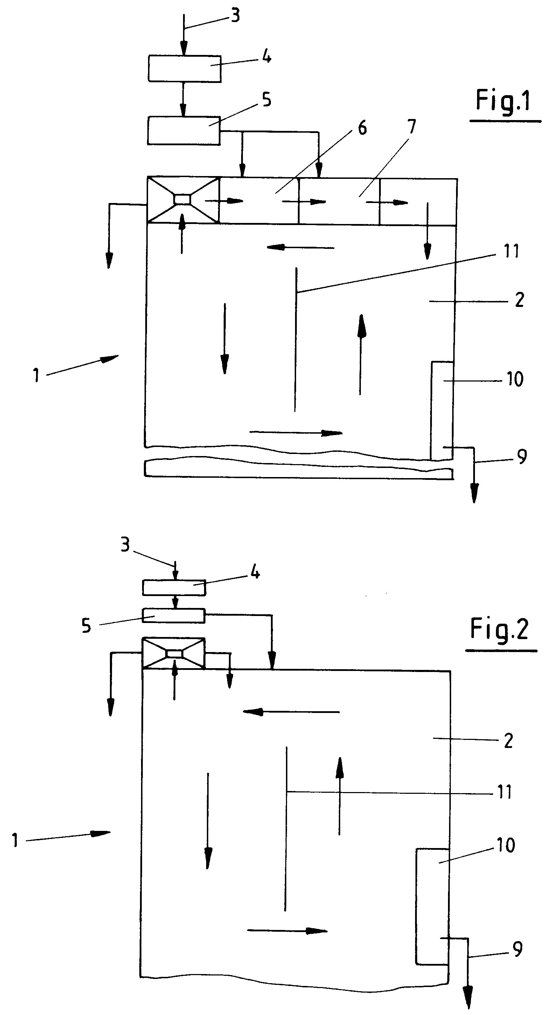

Fig. 1 und auch die Fig. 2 zeigen in vereinfachter Wiedergabe eine Abwasserreinigungsanlage 1 mit einem Belebungsbecken 2, das über den Zulauf 3 mit Rechen 4 und Sandfang 5 mit Abwasser versorgt wird.

Im Falle der Fig. 1 sind dem eigentlichen Belebungsbecken 2 mehrere Phosphorbehandlungsbecken 6, 7 vorgeordnet.

Von dem Phosphorbehandlungsbecken 6, 7 bzw. auch direkt vom Sandfang 5 wird das Abwasser in das Belebungsbecken 2 eingeführt, wobei über die Führungswände 11, 12 für eine gewisse Strömungsrichtung gesorgt wird.

Vor dem Ablaufrohr 9 ist ein Schlammabscheider 10 vorgesehen, über den der mitgeführte Belebtschlamm so abgesondert wird, dass mehr oder weniger reines Wasser über das Ablaufrohr 9 abgezogen wird.

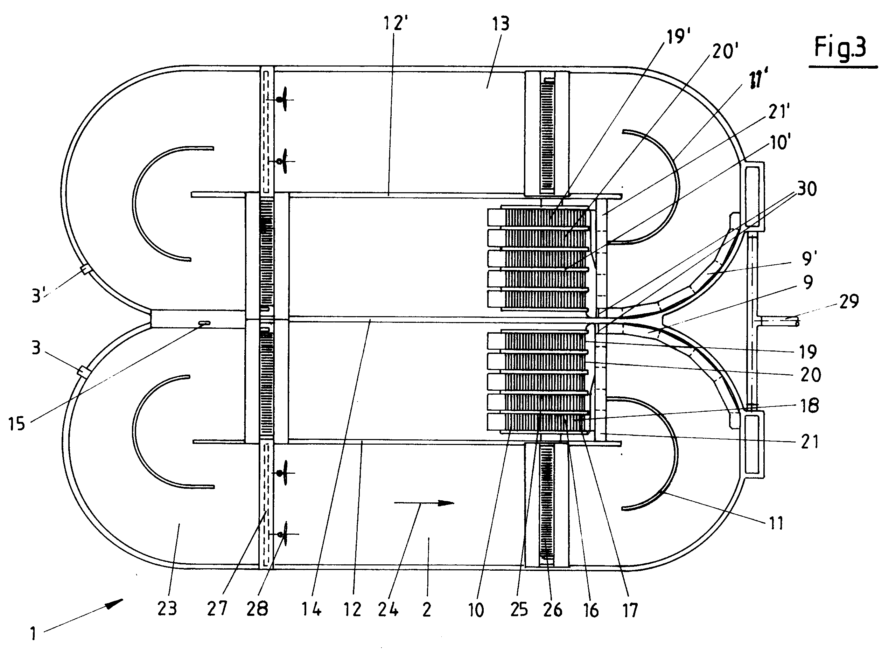

Fig. 3 zeigt eine Abwasserreinigungsanlage 1, bei der zwei Belebungsbecken 2, 13 zu einer Einheit zusammengeführt sind, wobei beiden das mit Schlamm angereicherte Abwasser über den Zulauf 3 zugeführt wird. Leicht erkennbar ist, dass über die Führungswände 11, 12 für eine bestimmte Strömung gesorgt wird, wobei zwischen beiden Belebungsbecken 2 und 13 eine Trennwand 14 mit Schieber 15 vorgesehen ist. Über den Schieber 15 ist die Möglichkeit gegeben, beide Belebungsbecken 2, 13 miteinander zu verbinden.

In die Strömung des zugeführten Wassers eingesetzt ist der Schlammabscheider 10, der aus vielen schräg zur Senkrechten verlaufenden Lamellenplatten 16, 17, 18 zusammengesetzt ist. Die einzelnen Lamellenplatten 16, 17, 18 sind zu Lamellenpaketen 19, 20 zusammengefügt, die als solche über eine Balkenkonstruktion 25 zu einer Kompaktstation oder Kompakteinheit verbunden sind, die als solche in das jeweilige Belebungsbecken 2, 13 eingesetzt werden kann.

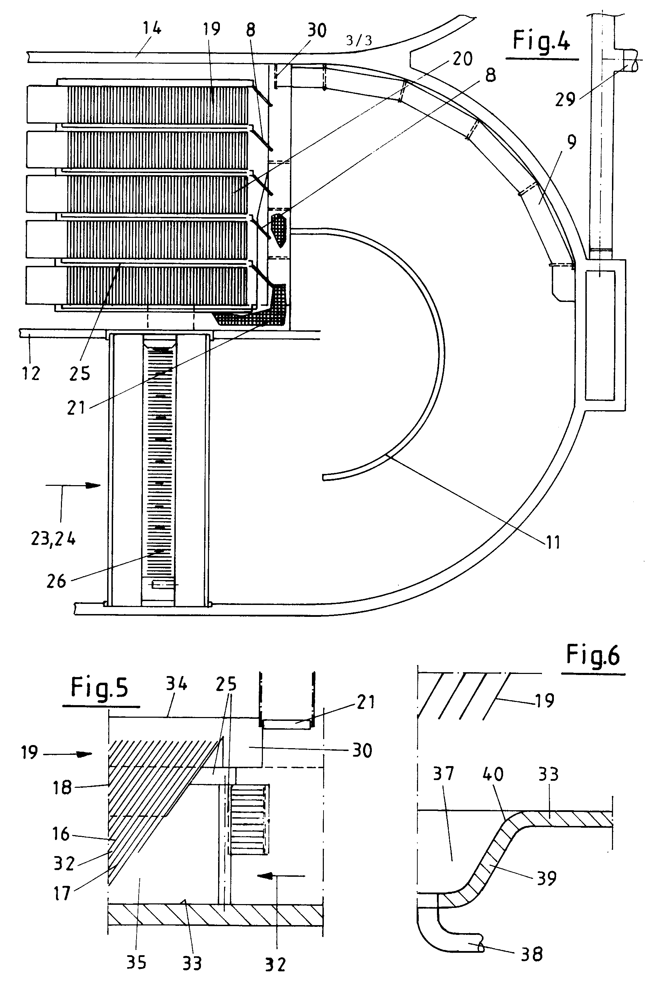

Der Wasserstrom 23, der in Strömungsrichtung 24 geführt wird, wird noch vor den Lamellenplatten 16, 17, 18 durch einen Belüfter 26 mit dem notwendigen Sauerstoff versorgt, so dass die Mikroorganismen im Belebtschlamm bei Erreichen der Lamellenpakete 19, 20 bzw. des gesamten Schlammabscheiders 10 sich in einer optimalen Verfassung befinden. Vorgeschaltete Leitwände 11, 12, die insbesondere auch Fig. 4 in ihrer Position entnommen werden können, sind den einzelnen Lamellenpaketen 19, 20 vorgeordnet.

Sowohl für die Überwachung des Abscheideprozesses wie auch für die Montage und Demontage dient ein Laufsteg 21, der in Strömungsrichtung 24 vor den Lamellenpaketen 19, 20 über den Belebungsbecken 2, 13 verläuft.

Für die notwendige Strömung innerhalb der Belebungsbecken 2, 13 sorgt nicht nur das über den Zulauf 3 zuströmende Abwasser, sondern auch der Rührwerksbrücke 27 zugeordnete Rührwerke 28.

Das Wasser, das die einzelnen Lamellenpakete 19, 20 durchströmt und das sich vom Belebtschlamm getrennt hat wird über die Ablaufrinne 30 einem Sammelrohr 29 zugeführt, von wo es entweder dem Vorfluter oder dem Nachklärbecken zuläuft.

Fig. 4 zeigt den Bereich des Schlammabscheiders 10 in vergrößerter Wiedergabe, wobei insbesondere auch die Anordnung der Rahmenkonstruktion 8 erkennbar wird. Erkennbar ist auch der Laufsteg 21, über den dieser Bereich gut überwacht werden kann. Im vorliegenden Fall, wird von beiden Belebungsbecken 2, 13 das gereinigte Wasser über die Ablaufrinne 30 aufgenommen und dem Sammelrohr 29 zugeführt, um von hieraus gemeinsam dem Vorfluter beispielsweise zugeführt zu werden.

Fig. 5 zeigt einen Schnitt durch den Schlammabscheider 10, der wie schon erwähnt eine Vielzahl von schräggestellten Lamellenplatten 16, 17, 18 aufweist, die zu Lamellenpakten 19, 20 zusammengefügt sind. Der Lamellenzwischenraum 32 ist dabei so gewählt, dass sich der niedergeschlagene bzw. sich niederlegende Belebtschlamm nicht aufbacken kann, um den Lamellenzwischenraum 32 zu verschließen. Vielmehr ist durch einen Abstand von 100 mm oder mehr die Sicherheit gegeben, dass der Belebtschlamm auf den Schrägen der Lamellenplatten 16, 17, 18 abrutscht, um so wieder ins Belebungsbecken 2, 13 zu gelangen. Von hier aus wird er entweder vom Wasserstrom 23 erfasst und mitgenommen oder aber auf geeignete Art und Weise entsorgt. Die einzelnen Lamellenpakete 19, 20 sind, wie schon erwähnt, über eine Balkenkonstruktion 25 gehalten, wobei sich diese auf dem Boden 33 abstützt oder auch an der Seitenwand 34. Es verbleibt unterhalb der Lamellenpakete 19, 20 ein ausreichender Abstand 35, so dass immer ein ausreichender Wasserstrom 23 unterhalb des Schlammabscheiders 10 verbleibt, der den absinkenden Schlamm mitführt.

Bildet sich zuviel Schlamm im Schlammbunker 37 unterhalb des Schlammabscheiders 10 so wird dieser, wie aus Fig. 6 ersichtlich über den Schlammabzug 38 abgeführt. Hierbei werden Turbulenzen und sonstige Nachteile dadurch verhindert, dass die Seitenwände 39 des Schlammbunkers 37 schräg verlaufen und außerdem abgerundete Kanten 40 aufweisen.

Alle genannten Merkmale, auch die den Zeichnungen allein zu entnehmenden, werden allein und in Kombination als erfindungswesentlich angesehen.

## Patentansprüche

1. Verfahren zur biologischen Abwasserreinigung mit Abwasservorbehandlung, Belebtschlammbehandlung im Belebungsbecken unter Sauerstoffzufuhr durch Luft oder Reinsauerstoff und anschließender Schlammrückhaltung durch Trennung von Schlamm und Reinwasser,
**dadurch gekennzeichnet,**
dass Belebtschlammbehandlung und Schlammrückhaltung derart kombiniert werden, dass die Schlammrückhaltung im Anschluss an die Belebtschlammbehandlung bereits im Belebungsbecken so vorgenommen wird, dass das Belebungsbecken mit > 8 g/l Trockensubstanzgehalt betrieben wird.

2. Verfahren nach Anspruch 1,
**dadurch gekennzeichnet,**
dass die Schlammrückhaltung zu > 50 < 100 % im Belebungsbecken vorgenommen und sich daran eine Filterbehandlung des Abwassers anschließt.

3. Verfahren nach einem der vorhergehenden Ansprüche,
**dadurch gekennzeichnet,**
dass die schlammbeladene Flüssigkeit etwa in der Größenordnung des zuströmenden Abwassers dem Schlammabscheider gezielt zugeführt wird.

4. Verfahren nach einem der vorhergehenden Ansprüche,
**dadurch gekennzeichnet,**
dass vor dem Wasserablauf aus dem Belebungsbecken die mit Belebtschlamm beladene Flüssigkeit einem oder mehreren im Belebungsbecken angeordneten Schlammabscheidern zugeführt und dort vom Schlamm befreit wird.

5. Verfahren nach einem der vorhergehenden Ansprüche,
**dadurch gekennzeichnet,**
dass die Strömung der schlammbeladenen Flüssigkeit in zur Senkrechten schräggestellten Lamellenplatten eines Schlammabscheiders vergleichmäßigt und dabei in Reinwasser und Schlamm getrennt wird, wobei das Reinwasser im Gegenstrom zum auf den Lamellenplatten abgeschiedenen und nach unten rutschenden Schlamm in den Lamellen nach oben geführt wird, während der Schlamm vorzugsweise vom Umlaufwasser abtransportiert wird.

6. Verfahren nach einem der vorhergehenden Ansprüche,
**dadurch gekennzeichnet,**
dass die schlammbeladenen Flüssigkeit mit Sauerstoff versorgt und dann auf die von den Lamellenplatten gebildeten Lamellen gerichtet wird.

7. Verfahren nach einem der vorhergehenden Ansprüche,
**dadurch gekennzeichnet,**
dass der in den Bereich des Belebungsbeckens unterhalb der Lamellen bzw. Lamellenplatten abgerutschte biologische Überschussschlamm in regelmäßigen Abständen aus dem System entfernt wird.

8. Anlage zur Durchführung des Verfahrens nach Anspruch 1 oder einem oder mehreren der Ansprüche 2 bis 6 mit einem im Zulauf (3) angeordneten Rechen (4), einem Sandfang (5) und einem Belebungsbecken (2, 13) mit Ablaufleitung (9),
**dadurch gekennzeichnet,**
dass vor der Ablaufleitung (9) ein den Strömungsquerschnitt des Belebungsbeckens (2, 13) ganz oder teilweise ausfüllend ausgebildeter Schlammabscheider (10), vorzugsweise mit schräggestellten Lamellenplatten (16, 17, 18) angeordnet ist.

9. Anlage nach Anspruch 8,
**dadurch gekennzeichnet,**
dass die Lamellenplatten (16, 17, 18) als Kunststoffplatten ausgebildet sind, die einen Lamellenplattenabstand (32) von 50 - 500 mm, vorzugsweise 100 mm aufweisen.

10. Anlage nach einem der vorhergehenden Ansprüche,
**dadurch gekennzeichnet,**
dass die Lamellenplatten (16, 17, 18) zu Lamellenpaketen (19, 20) zusammengefasst in der schlammbeladenen Flüssigkeit (23) angeordnet und über eine Befestigungskonstruktion (25) fixiert sind, die sich auf dem Beckenboden (33) und/oder an den Seitenwänden (34) des Belebungsbeckens (2, 13) abstützt.

11. Anlage nach einem der vorhergehenden Ansprüche,
**dadurch gekennzeichnet,**
dass in Strömungsrichtung (24) vor dem Schlammabscheider (10) ein in das Belebungsbecken (2, 13) integrierter Oberflächenbelüfter (26) angeordnet ist oder bei Einsatz einer Druckbelüftung eine geeignete Strömung erzeugende Tauchrührwerke vorgesehen sind.

12. Anlage nach einem der vorhergehenden Ansprüche,
**dadurch gekennzeichnet,**
dass der Schlammabscheider (10) mit den Lamellenplatten (16, 17, 18) über die Befestigungskonstruktion (25) einen ausreichenden Abstand (35) von vorzugsweise 1/5 bis 1/3 der Beckengesamthöhe zum Beckenboden (33) wahrend angeordnet ist.

13. Anlage nach einem der vorhergehenden Ansprüche,
**dadurch gekennzeichnet,**
dass am oder im Belebungsbecken (2, 13) an einer oder an mehreren Stellen Schlammabzüge (38) für den Überschussschlamm zugeordnet sind.
